# EUROPEAN PATENT APPLICATION

(11) **EP 2 570 336 A2**
(43) Date of publication of application: **20.03.2013**
(21) Application number: 12196735.0
(22) Date of filing: 23.08.2010
(51) Int. Cl.: B62D 59/04

(54) **Auxiliary drive unit for a trailer**

(30) Priority: 18.12.2009 CN 200910259301; 18.12.2009 CN 200910259302
(62) Divisional of application: 10173680.9
(71) Applicant: Carman Enterprise Co., Ltd., Yuhang District Hangzhou, Zhejiang 311121 (CN)
(72) Inventor: Xian Wei, Li, Hangzhou (CN); An Dong, Chen, Hangzhou (CN); Jun Qiang, Wang, HangZhou (CN)
(74) Representative: Olsen, Peter Vestergaard

(57) **Abstract**

A vehicle drive device comprises a support (7) fixed to a chassis (6) of the vehicle, a moving carrier (2) holding a drive motor (1), a gear box (3) of the drive motor, bearings and a roller (4), wherein the drive motor, the gearbox, the bearings and the roller are connected to each other in sequence to drive the roller to rotate, and the roller can act upon a tyre of the vehicle to rotate the wheel of the vehicle by the rotary movement of the roller. The vehicle drive device further comprises a servo-drive device (9) connected to a moving carrier through a linkage to drive the moving carrier to move along a circular arc-shaped path, so that the roller can be shifted between a rest position and an operating position. The vehicle drive device according to the present invention drives the moving carrier to move along a circular arc-shaped path so that the roller moves toward the wheel (the tyre) of the vehicle along a circular arc-shaped path which is located in a plane extending substantially perpendicularly to the axis of rotation of the wheel of the trailer when the auxiliary drive unit is mounted on a trailer. This will cause the roller to press against the tyre from an obliquely downward direction, effectively increasing the pressing force to the tyre.

## Description

### Technical Field

This invention concerns an auxiliary drive unit, in particular, a drive unit for driving and manoeuvring a trailer or a caravan. The invention also concerns a caravan with an auxiliary drive unit according to the invention.

### Background Art

Powered vehicles are driven to move for a long distance by their drive systems such as engines, electric motors or hybrid synergy drive systems. While non-powered vehicles, such as trailers, are not equipped with drive systems themselves. A trailer, for example, is a non-powered vehicle hauled by a powered vehicle. Trailers are widely used in various fields such as agriculture, crafts, building industries for mass transport of materials. Trailers are also used for military purposes, recreational travelling, accommodation, and so on. Because trailers, especially non-powered caravans, are able to move for a long distance only when they are hauled by towing vehicles, a separate driving device is often necessary for manoeuvring the trailers when they are to be coupled to their towing vehicles, entering into/coming out the garages or repositioning when the trailers are not coupled to their towing vehicles.

In EP 1 925 540 B1 is disclosed an auxiliary drive unit for a trailer, the unit including a support adapted to be fixed to a chassis of the trailer, with a drive motor for driving a roller, and with a movable carrier provided with a gearbox and a drive roller. The gearbox forms a drive connection between the drive motor and the drive roller. A servo-drive device is arranged so as to move the carrier in relation to the support between an operating position in which the drive roller is in contact with a tyre of the vehicle, and a rest position in which the drive roller is not in contact with the tyre, and manual actuation of the movement of the carrier and roller is thus avoided. The drive motor, the gearbox, and the roller are connected to each other in sequence to drive the roller to rotate, and the roller is arranged to act upon a tyre of the vehicle to rotate the wheel of the vehicle by the rotary movement of the roller. This prior art auxiliary drive causes the carrier with the drive roller to move linearly to and from the tyre of the vehicle. The force providing engagement between the roller and the tyre is provided as a direct force by the servo-drive device, necessitating a strong and heavy dimensioned servo-drive device for providing the force.

EP 1 203 713 B1 discloses an auxiliary drive unit for a trailer, where a carrier with a roller for engaging the vehicle wheel tyre is pivoted about a vertical axis by actuating a lever manually. Besides the inconvenience of manual actuation, due to the movement in a plane approximately in the same plane as the vehicle wheel, there is a risk that the roller will not bear on the tyre with a uniform force across the width of the tyre.

EP 1 394 024 A2 discloses an auxiliary drive unit for a trailer, also including a support fixed to a chassis of the trailer, with a drive motor for driving a roller, and with a movable carrier provided with a gearbox and a drive roller. A gearbox forms a drive connection between the drive motor and the drive roller. A servo-drive device is arranged so as to move the carrier in relation to the support between an operating position and a rest position. The drive motor turns a cam disc acting as the servo-drive device. The movement of the carrier is controlled by two parallel pins guided by respective slots, of which a forward slot is straight and a rear slot has a curved shape. The rear slot comprises a horizontal section and a rearwards adjacent section which is angled downward vertically or obliquely. The motion of the carrier and thus the movement of the roller towards the trailer wheel is therefore partly a straight movement and partly a rather abrupt pivoting movement. This prior art has the advantage of using a common motor for actuating the servo-drive and for rotating the roller but the mechanical structure needed for the combined action is complicated. Furthermore, after engaging the drive roller with the trailer wheel, the carrier and the drive roller are disengaged from the trailer wheel by actuating a lever by foot or hand.

DE 20 2009 005416 U1 discloses an auxiliary drive unit for a trailer having a servo-drive device is connected to a movable carrier such that the movable carrier may move along a substantially circular arc-shaped path, and so that a roller for engaging a tyre on the trailer can be shifted between the rest position and the operating position, the arc-shaped path being located in a plane extending substantially perpendicularly to the axis of rotation of the wheel of the trailer,

### Summary of the Invention

The auxiliary drive unit according to the invention is peculiar in that the servo-drive device is connected to the movable carrier through a pivotable linkage so that the movable carrier may move along a substantially circular arc-shaped path, and so that the roller can be shifted between the rest position and the operating position, the arc-shaped path being located in a plane extending substantially perpendicularly to the axis of rotation of the wheel of the vehicle when the auxiliary drive unit is mounted on a trailer.

The vehicle drive device according to the present invention drives the moving carrier to move along a circular arc-shaped path so that the roller moves toward the wheel (the tyre) of the vehicle along a circular arc-shaped path. This will cause the roller to press against the tyre from an obliquely downward direction, effectively increasing the pressing force to the tyre. In addition, the vehicle drive device of the invention has advantageous in its compact structural design, easy mounting and excellent overall performance.

According to the invention, the motor is fixed to the movable carrier, where the carrier is provided with a front sliding pin and a rear sliding pin, where the sliding pins extend laterally relative to the carrier at opposing sides of the carrier, and where the front and rear sliding pins are slidably received in respective arc-shaped slots provided in the support, where the servo-drive device is pivotably suspended at the support about a rotary axis, where the servo-drive device is connected to a first end of the linkage in such a way as to provide extension/retraction of the linkage, where a second end of the linkage is connected to the movable carrier through the rear sliding pin, such that extension or retraction of the linkage causes the rear and front sliding pins to move along the arc-shaped sliding slots so as to change the position of the carrier and the roller between the rest position and the operating position. A smooth curving movement of the roller is thus provided towards the tyre.

The invention also concerns a caravan including at least two auxiliary drive units according to the invention. Hereby, two or more of the wheels of the caravan can be rotated through coordinating and controlling the corresponding vehicle drive devices when the caravan is installed with a plurality of said vehicle drive devices, allowing the vehicle to move forward or backward in a straight line and/or a curved line.

### Brief Description of the Drawings

Embodiments of the invention will be described below with reference to the accompanying drawings, in which:
- Fig. 1: shows a side view of an embodiment of the auxiliary drive unit according to the invention in a rest position;
- Fig. 2: shows the same as Fig. 1, but with the auxiliary drive unit in an operating position;
- Fig. 3: shows a side view of an embodiment of the auxiliary drive unit not partthe invention in a rest position;
- Fig. 4: shows the same as Fig. 3, but with the auxiliary drive unit in an operating position;
- Fig. 5: shows a side view of an embodiment of the auxiliary drive unit not part of the invention in a rest position;
- Fig. 6: shows the same as Fig. 5, but with the auxiliary drive unit in an operating position;
- Fig. 7: shows a detail of the gear wheels in the gearbox in cross-section along the line A-A on Fig. 5; and
- Fig. 8: shows a perspective front view of the third embodiment of the auxiliary drive unit.

### Description of Example Embodiments

The preferred embodiments will be described with reference to the accompanying drawings, in which like parts will be noted with same reference number and will not be described repeatedly.

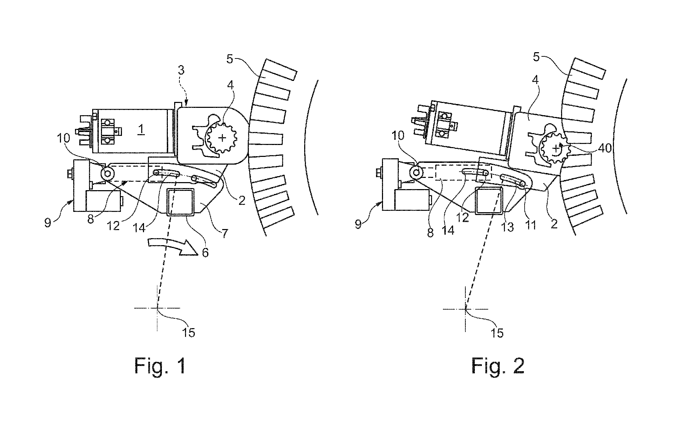

Common to the described embodiments, cf. Figs. 1, 3 and 5 in particular, the auxiliary drive unit includes a drive motor 1 and a gearbox 3 connecting an output shaft of the motor 1 with a drive roller 4, all elements which are known per se or obvious to the skilled in the art. The drive roller 4 is mounted in a movable carrier 2 by not shown bearings, preferably by one bearing at each end of the roller 4. The drive roller 4 may engage a tyre 5 of a trailer in the operating position of the auxiliary drive unit.

The auxiliary drive unit is mounted on a support 7, which is preferably configured as two parallel parts between which the carrier 2 is partially suspended. The support 7 is designated with the same number in all embodiments though the shape of the support 7 will differ according to the application in the embodiments. The support 7 is rigidly mounted on a frame part or member 6 of the chassis of the trailer, usually a caravan. Attached to the support 7 is provided a servo-drive device 9 for driving an extending/retracting linkage 8.

The servo-drive device 9 may be a commercially available unit, e.g. a small electric motor drive unit, and the linkage 8 may be a well-know screw spindle, but other kinds of servo-drive units and linkage may be applied. The servo-drive device 9 and the associated linkage 8 are, as shown, pivotably suspended on the support 7 by a rotatable, but otherwise fixed connection 10 with corresponding rotary axis.

In the an embodiment of the inventive auxiliary drive unit shown on Figs. 1 and 2, motor 1, gearbox 3 and roller 4 are built together and mounted on the carrier 2 so as to form a moving unit. In this embodiment, the carrier 2 is provided with sliding pins 11 and 12 projecting laterally from the carrier 2 so as to be supported by the support 7 in arc-shaped slots 13 and 14. The front and rear sliding pins 11, 12 extend from opposite sides of the carrier 2, engaging front and rear slots 13, 14, respectively, provided in the parallel parts of the supports; only one part of the support 7 is shown on Figs. 1 and 2. An end of the linkage 8 is connected to the rear sliding pin 12.

By this arrangement, the carrier 2 with motor 1, gearbox 3 and roller 4 may reversibly move in an arc-shaped path between the rest position on Fig. 1 and the operating position on Fig. 2, the path lying in a plane which is substantially perpendicular to the axis of rotation of the trailer wheel fitted with the tyre 5. The arc-shaped path is substantially circular with a radius extending from a point 15 a short distance from the drive unit, the point 15 thus constituting a rotary axis. The movement from rest position to operating position is provided by the servo-drive unit 9 which by extending the linkage 8 moves the carrier 2 and thereby the roller 4 against the tyre 5, and the roller 4 may then drive the wheel of the trailer, when the motor 1 is energised by a not shown power supply via a remote control system.

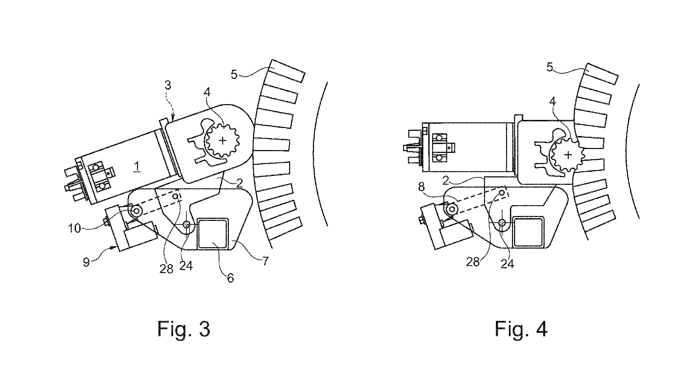

In a second embodiment of the auxiliary drive unit shown on Figs. 3 and 4, motor 1, gearbox 3 and roller 4 are also built together and mounted on the carrier 2 so as to form a moving unit. In this embodiment, the carrier 2 is suspended by a journal or other rotatable connection in the support 7, preferably between two parallel parts of the support 7, for pivoting about an axis 24 extending through the support 7 and in parallel with the rotary axis of the wheel carrying the tyre 5. The rotary axis 24 is spaced apart from the rotary axis of the connection 10 between the servo-drive device 9 and linkage 8. The linkage 8 of the servo-drive device 9 is rotatably connected to a pin 28 provided in the carrier 2 somewhere between the axis 24 and motor 1/roller 4 unit. Extending the linkage 8 causes the carrier 2 with motor 1, gearbox 3 and roller 4 to pivot from the rest position to the operating position shown on Fig. 4. Though in principle similar to the first embodiment above, the second embodiment of the auxiliary drive unit will provide a shorter radius of curvature of the arc-shaped path of the carrier 2, which is some cases may be advantageous.

On Figs. 1 - 4, the roller 4 is shown moving downwards when moving to the operating position. However, other embodiments with upward movements may just as well be provided within the scope of the invention, as it has no influence on the technical function.

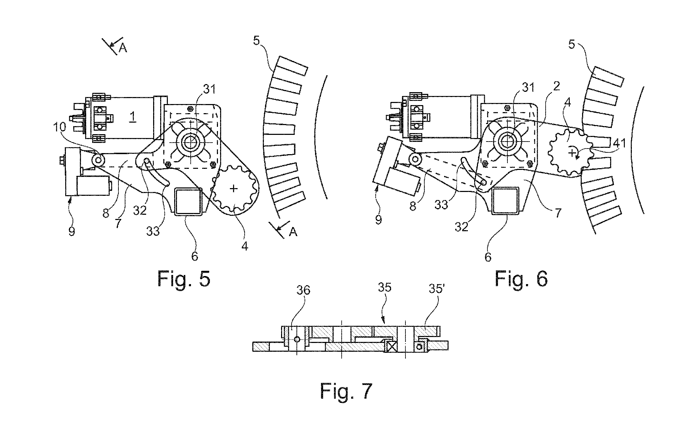

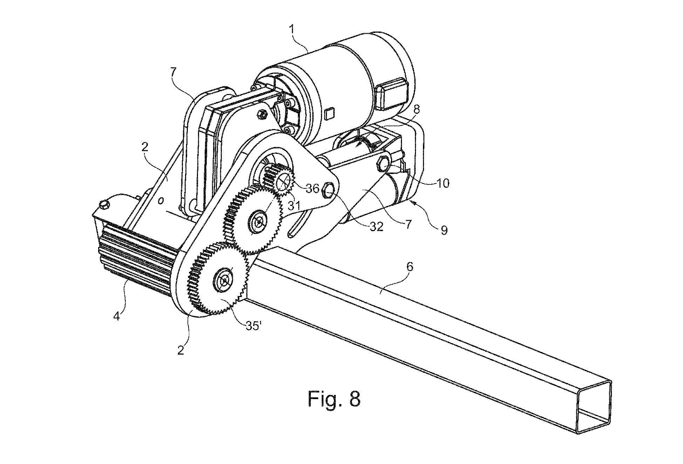

In a third embodiment of the auxiliary drive unit shown on Figs. 5 - 8, which is different from the first and second embodiment above in that the motor 1 is secured to the support 7. The support 7 is here adapted so as to provide a mount for the motor 1 and a not shown angular drive, e.g. a worm gear, and where an output shaft 36 of the angular drive is connected with the first gear wheel in the gearbox 3 with gear wheels 35, see in particular Figs. 7 and 8. The carrier 2 is here configured as a flat piece, a plate-shaped arm, which is rotatably suspended at the side of the support 7 with a rotary axis 31 coinciding with the rotary axis 31 of the output shaft 36. As shown the gear wheels 35 are rotatably suspended at one side of the carrier 2, the last gear wheel 35' being drivingly connected with the roller 4.

An extension of the carrier 2 is provided with a pin 32 extending through an arc-shaped slot 33 in the support 7, the slot 33 having a circular curvature with a centre in the axis 31. The pin 32 is connected with an end of the linkage 8 and thereby the servo-drive device 9. When extending the linkage 8, the carrier 2 will pivot through an arc-shaped path from the rest position to the operating position where the roller 4 will engage the tyre 5. The axis of rotation 31 of the carrier 2 is parallel with the rotary axis of the trailer wheel carrying the tyre 5, thus locating the arc-shaped path in a plane extending substantially perpendicularly to the axis of rotation of the wheel.

In Figs. 5- 8, the carrier 2 is shown moving upwards when moving to the operating position. However, other embodiments with downward movements may just as well be provided within the scope of the invention, as it has no influence on the technical function.

Since the movement of the roller 4 is arc-shaped, there may be a tendency that the roller 4 will cause rotation of the tyre 5 and thereby the wheel of the trailer if the roller 4 is locked. This will be the case when the engagement between the roller 4 and the tyre 5 is not strictly radial to the wheel carrying the tyre 5 and when the roller 4 cannot turn freely, due to the speed reducing gearing from the drive motor 1 to the roller 4. This effect is increased by the fact that the drive motor 1 is usually a DC motor where the permanent magnets in the stator will try to hold the rotor in the motor 1 in a nonrotating position when no current is supplied to the motor 1.

It is very unsuitable if the tyre 5 is turned during the action where the roller 4 engages the tyre, since unwanted movements of the trailer thereby occurs. Therefore, a control system according to the invention is provided for the auxiliary drive unit which may compensate for this undesired effect. The drive motor 1 is normally without power supply, thereby locking the roller 4 in non-rotatable condition. By the inventive control system there is provided a control circuit which can supply a pulse-width modulated current to the drive motor 1, turning the rotor of the motor 1 in a specific direction so that the roller 4 is released and is able to turn in the direction shown with the arrows 40 and 41 on Figs. 2 and 6, respectively. Thereby the roller 4 will not induce a tangential force to the tyre 5 due to the arc-shaped movement of the carrier 2, and movement of the trailer is thereby avoided.

In order to effect this compensation properly, there is provided a sensor connected with the power supply of the servo-drive device 9, which in this case is also powered by a DC motor. When the servo-drive device 9 is activated for moving the carrier 2 from the rest position to the operating position, a current is supplied to the device 9. As the roller contacts the surface of the tyre 5, a resistance to the movement of the carrier 2 arises, leading to an increased current to the DC motor in the servo-drive device 9. When the control circuit detects a current to the device 9 which exceeds a set value, there is supplied a pulse-width modulated current to the drive motor 1 such that the roller 4 turns in the directions shown on Figs. 2 and 6, thus preventing inadvertent turning of the trailer wheel carrying the tyre 5.

The present invention also relates to a caravan installed with the auxiliary drive unit, one unit at each wheel of the caravan. The caravan itself may be self-powered, half-powered or non-powered, in any of which the auxiliary drive device is able to play a role of driving the wheels to rotate for manoeuvring the caravan.

When installing one auxiliary drive unit according to the invention, a trailer can be manoeuvred by remote control and driven short distances, for example when positioning a caravan on a camping site or in a parking space.

In addition, a plurality of linkages of a plurality of vehicle drive devices servo can be driven by a single servo-drive device. This will simplify the structure design and reduce costs.

The invention is not limited to the above embodiments. For example, the arc-shaped path of the carrier may deviate from a strictly circular path if more expedient, particularly at the part of the movement near the tyre. The sliding connection between carrier and support may be provided in other way than by sliding pins engaging arc-shaped slots, for example by a dovetail engagement or other countersunk designs.

Also, the servo-drive device may use any other principle, like electro-hydraulic, electro-magnetic, hydraulic, hydro-pneumatic or pneumatic as its driving method. For example, the servo-drive device can be electro-hydraulic driving an electro-hydraulic push rod to change the length of the linkage.

Although the embodiments of the present invention are described and explained in detail, they are only for illustration and example, the scope of the present invention only being limited by the terms of the attached claims.

## Claims

1. An auxiliary drive unit for a trailer, for example a caravan, including:
- a support (7) adapted to be fixed to a frame part (6) of the trailer;
- a drive motor (1) for driving a roller (4);
- a movable carrier (2) provided with a gearbox (3) and a drive roller (4), the gearbox forming a drive connection between the drive motor and the drive roller (4);
- a servo-drive device (9) arranged so as to move the carrier in relation to the support (7) between an operating position in which the drive roller is in contact with a tyre (5) of the vehicle, and a rest position in which the drive roller is not in contact with the tyre;
where the drive motor (1), the gearbox (3), and the roller (4) are connected to each other in sequence to drive the roller (4) to rotate, and where the roller (4) is arranged to act upon the tyre (5) of the vehicle to rotate the wheel of the vehicle by the rotary movement of the roller (4);
where the servo-drive device (9) is connected to the movable carrier (2) through a pivotable linkage (8) so that the movable carrier (11) may move along a substantially circular arc-shaped path, and so that the roller (4) can be shifted between the rest position and the operating position, the arc-shaped path being located in a plane extending substantially perpendicularly to the axis of rotation of the wheel of the trailer when the auxiliary drive unit is mounted on a trailer;
wherein the motor (1) is fixed to the movable carrier (2), where the carrier (2) is provided with a front sliding pin (11) and a rear sliding pin (12), where the sliding pins (11, 12) extend laterally relative to the carrier at opposing sides of the carrier, and where the front and rear sliding pins (11, 12) are slidably received in respective front and rear arc-shaped slots (13 and 14) provided in the support (7);
- where the servo-drive device (9) is pivotably suspended at the support (7) about a rotary axis (10), where the servo-drive device (9) is connected to a first end of the linkage in such a way as to provide extension/retraction of the linkage;
- where a second end of the linkage (8) is connected to the movable carrier (2) through the rear sliding pin (12), such that extension or retraction of the linkage (8) causes the rear and front sliding pins (11, 12) to move along the arc-shaped sliding slots so as to change the position of the carrier (2) and the roller between the rest position and the operating position.

2. Auxiliary drive unit according to -claim 1, wherein the described linkage (8) comprises a screw spindle.

3. Auxiliary drive unit according to -claim 1 or 2, wherein the described linkage (8) comprises an actuator.

4. Auxiliary drive unit according any of claims 1 - 3, wherein the servo-drive device (9) comprises a power unit selected from the group consisting of electrical, hydraulic, pneumatic, electro-hydraulic, electro-magnetic, and hydro-pneumatic powered unit.

5. Auxiliary drive unit according to any of claims 1 - 4, wherein the servo drive device (9) comprises an electric motor with a gear box.

6. A caravan including at least two auxiliary drive units according to any of claims 1 - 5.

7. Caravan according to claim 6, wherein two or more of the wheels of the caravan can be rotated through coordinating and controlling the corresponding vehicle drive devices when the caravan is installed with a plurality of said vehicle drive devices, allowing the vehicle to move forward or backward in a straight line and/or a curved line.
